# EUROPEAN PATENT APPLICATION

(11) **EP 4 819 161 A1**
(43) Date of publication of application: **07.10.2026**
(21) Application number: 24895604.7
(22) Date of filing: 26.06.2024
(51) Int. Cl.: G21C 17/108

(54) **CURRENT SIGNAL DELAY COMPENSATION METHOD AND APPARATUS, COMPUTER DEVICE AND STORAGE MEDIUM**

(30) Priority: 29.11.2023 CN 202311627061
(71) Applicant: China Nuclear Power Technology Research Institute Co., Ltd., Shenzhen, Guangdong 518031 (CN); CGN Power Co., Ltd., Shenzen, Guangdong 518028 (CN); China Nuclear Power Engineering Co., Ltd., Shenzhen, Guangdong 518124 (CN)
(72) Inventor: CHEN, Tianming, Shenzhen, Guangdong 518031 (CN); HU, Yisong, Shenzhen, Guangdong 518031 (CN); MAO, Yulong, Shenzhen, Guangdong 518031 (CN); LU, Xianghui, Shenzhen, Guangdong 518031 (CN); HU, Yousen, Shenzhen, Guangdong 518031 (CN); CAO, Jianhua, Shenzhen, Guangdong 518031 (CN); WANG, Weiru, Shenzhen, Guangdong 518031 (CN); FENG, Yingjie, Shenzhen, Guangdong 518031 (CN); LI, Kejia, Shenzhen, Guangdong 518031 (CN); MENG, Shuqi, Shenzhen, Guangdong 518031 (CN); ZHANG, Wei, Shenzhen, Guangdong 518031 (CN)
(74) Representative: Zacco Sweden AB
(86) International application number: PCT/CN2024/101537
(87) International publication number: WO 2025/112501

(57) **Abstract**

The present application relates to a current signal delay compensation method and apparatus, a computer device and a storage medium. The method comprises: during the process of a self-powered rhodium detector (SPND) monitoring the current of a rhodium reactor, acquiring a real-time current signal sampled by the SPND at the present sampling moment; and, on the basis of delay compensation parameters, performing delay compensation processing on the real-time current signal so as to obtain a target current signal, the real-time current signal being a current signal generated during the decay of a rhodium element in the rhodium reactor, the delay compensation parameters being related to the real-time current signal, historical current signals collected by the SPND at each historical sampling moment before the present sampling moment and a sampling period, and the delay compensation parameters being used for representing current attenuation magnitude caused by the decay of the rhodium element in the rhodium reactor before the present sampling moment.

## Description

### RELATED APPLICATIONS

This application claims priority to Chinese Patent Application No. 202311627061.6, entitled "Current Signal Delay Compensation Method and Apparatus, Computer Device and Storage Medium", filed on November 29, 2023, which is incorporated herein by reference in its entirety.

### TECHNICAL FIELD

The present application relates to the field of nuclear reactor signal measurement technologies, and in particular, to a current signal delay compensation method and apparatus, a computer device and a storage medium.

### BACKGROUND

In a nuclear reactor, a neutron flux can directly reflect a power and a state of the nuclear reactor, magnitude of a current signal at each position in the reactor is directly proportional to the neutron flux at this position, and therefore, the power and the state of the reactor are generally obtained by measuring the current signal in the reactor.

Currently, the current signal in the reactor is usually measured by a self-powered neutron detector and processed by a filter, so as to realize delay compensation on the current signal.

However, the above delay compensation manner for the current signal has poor flexibility.

### SUMMARY

Based on this, in order to solve the above technical problem, there are provided a current signal delay compensation method and apparatus, a computer device and a storage medium, which can reduce a cost and improve flexibility.

In a first aspect, the present application provides a current signal delay compensation method. The method includes:
acquiring, during a process of a self-powered neutron detector (SPND) monitoring a current of a rhodium reactor, a real-time current signal sampled by the SPND at a present sampling moment; and
performing, on a basis of delay compensation parameters, delay compensation on the real-time current signal to obtain a target current signal,
wherein the real-time current signal is a current signal generated during decay of a rhodium element in the rhodium reactor, the delay compensation parameters are related to the real-time current signal, historical current signals collected by the SPND at historical sampling moments before the present sampling moment and a sampling period, and the delay compensation parameters are used for representing the magnitude of current attenuation caused by the decay of the rhodium element in the rhodium reactor before the present sampling moment.

In an embodiment, performing, on the basis of the delay compensation parameters, the delay compensation on the real-time current signal to obtain the target current signal includes:
determining whether the present sampling moment is an initial sampling moment; and
acquiring, under a condition that the present sampling moment is the initial sampling moment, a first delay compensation parameter, and performing delay compensation on the real-time current signal by using the first delay compensation parameter to obtain the target current signal, the first delay compensation parameter being a delay compensation parameter calculated in a historical delay compensation process.

In an embodiment, performing, on the basis of the delay compensation parameters, the delay compensation on the real-time current signal to obtain the target current signal further includes:
acquiring, under a condition that the present sampling moment is not the initial sampling moment, the historical current signals collected by the SPND at the historical sampling moments and the sampling period;
calculating a second delay compensation parameter according to the real-time current signal, each historical current signal and the sampling period; and
performing delay compensation on the real-time current signal by utilizing the second delay compensation parameter to obtain the target current signal.

In an embodiment, calculating the second delay compensation parameter according to the real-time current signal, each historical current signal and the sampling period includes:
substituting the sampling period into a preset calculation formula to calculate a first compensation coefficient and a second compensation coefficient;
calculating a first decay compensation parameter according to the real-time current signal, each historical current signal and the first compensation coefficient, and calculating a second decay compensation parameter according to the real-time current signal, each historical current signal and the second compensation coefficient; and
summing the first decay compensation parameter and the second decay compensation parameter to obtain the second delay compensation parameter.

In an embodiment, the first decay compensation parameter is the magnitude of current attenuation caused by decay of the rhodium element in the rhodium reactor to an activated nucleus before the present sampling moment; the second decay compensation parameter is the magnitude of current attenuation caused by decay of the rhodium element in the rhodium reactor to an isomeric state before the present sampling moment.

In an embodiment, the method further includes:
acquiring a real current signal corresponding to the real-time current signal and output by the SPND at a preset moment, the preset moment being chronologically after the present sampling moment; and
comparing signal values of the real current signal and the target current signal to obtain a comparison result, and verifying accuracy of the delay compensation parameters according to the comparison result.

In a second aspect, the present application further provides a current signal delay compensation apparatus. The apparatus includes:
a signal acquiring module configured to, acquire, during a process of a self-powered neutron detector (SPND) monitoring a current of a rhodium reactor, a real-time current signal sampled by the SPND at a present sampling moment; and
a delay compensation module configured to, perform, on a basis of delay compensation parameters, delay compensation on the real-time current signal to obtain a target current signal, wherein the real-time current signal is a current signal generated during decay of a rhodium element in the rhodium reactor, the delay compensation parameters are related to the real-time current signal, historical current signals collected by the SPND at historical sampling moments before the present sampling moment and a sampling period, and the delay compensation parameters are used for representing the magnitude of current attenuation caused by the decay of the rhodium element in the rhodium reactor before the present sampling moment.

In a third aspect, the present application further provides a computer device. The computer device includes a memory and a processor, the memory storing a computer program, and the processor implementing the following steps when executing the computer program:
acquiring, during a process of a self-powered neutron detector (SPND) monitoring a current of a rhodium reactor, a real-time current signal sampled by the SPND at a present sampling moment; and
performing, on a basis of delay compensation parameters, delay compensation on the real-time current signal to obtain a target current signal,
wherein the real-time current signal is a current signal generated during decay of a rhodium element in the rhodium reactor, the delay compensation parameters are related to the real-time current signal, historical current signals collected by the SPND at historical sampling moments before the present sampling moment and a sampling period, and the delay compensation parameters are used for representing the magnitude of current attenuation caused by the decay of the rhodium element in the rhodium reactor before the present sampling moment.

In a fourth aspect, the present application further provides a computer-readable storage medium. The computer-readable storage medium has a computer program stored thereon, and the computer program, when executed by a processor, implements the following steps:
acquiring, during a process of a self-powered neutron detector (SPND) monitoring a current of a rhodium reactor, a real-time current signal sampled by the SPND at a present sampling moment; and
performing, on a basis of delay compensation parameters, delay compensation on the real-time current signal to obtain a target current signal,
wherein the real-time current signal is a current signal generated during decay of a rhodium element in the rhodium reactor, the delay compensation parameters are related to the real-time current signal, historical current signals collected by the SPND at historical sampling moments before the present sampling moment and a sampling period, and the delay compensation parameters are used for representing the magnitude of current attenuation caused by the decay of the rhodium element in the rhodium reactor before the present sampling moment.

In a fifth aspect, the present application further provides a computer program product. The computer program product includes a computer program which, when executed by a processor, implements the following steps:
acquiring, during a process of a self-powered neutron detector (SPND) monitoring a current of a rhodium reactor, a real-time current signal sampled by the SPND at a present sampling moment; and
performing, on a basis of delay compensation parameters, delay compensation on the real-time current signal to obtain a target current signal,
wherein the real-time current signal is a current signal generated during decay of a rhodium element in the rhodium reactor, the delay compensation parameters are related to the real-time current signal, historical current signals collected by the SPND at historical sampling moments before the present sampling moment and a sampling period, and the delay compensation parameters are used for representing the magnitude of current attenuation caused by the decay of the rhodium element in the rhodium reactor before the present sampling moment.

In the current signal delay compensation method and apparatus, the computer device and the storage medium, during the process of the SPND monitoring the current of the rhodium reactor, the real-time current signal sampled by the SPND at the present sampling moment is acquired, and then, on the basis of the delay compensation parameters, the delay compensation is performed on the real-time current signal generated during the decay of the rhodium element in the rhodium reactor, so as to obtain the target current signal. Since delay compensation is a software method, compared with a traditional technology in which hardware is used for delay compensation, the cost is reduced, and delay compensation can be performed on the current signal at any time, thus significantly improving the flexibility of delay compensation.

### BRIEF DESCRIPTION OF THE DRAWINGS

In order to illustrate the technical solutions in the embodiments of the present application or the prior art more clearly, the drawings required for describing the embodiments or the prior art will be described briefly. Apparently, the following described drawings are merely for the embodiments of the present application, and other drawings can be derived from the disclosed drawings by those of ordinary skill in the art without any creative effort.
FIG. 1 is a view of an application environment of a current signal delay compensation method according to an embodiment;
FIG. 2 is a schematic flow diagram of the current signal delay compensation method according to an embodiment;
FIG. 3 is a schematic diagram of a nuclear reaction during decay of a rhodium element in an embodiment;
FIG. 4 is a schematic flow diagram of verification of accuracy of delay compensation parameters in an embodiment;
FIG. 5 is a schematic diagram of a signal value relationship among a real-time current signal, a target current signal and a real current signal in an embodiment;
FIG. 6 is a schematic flow diagram of a current signal delay compensation method according to another embodiment;
FIG. 7 is a structural block diagram of a current signal delay compensation apparatus according to an embodiment;
FIG. 8 is a structural block diagram of the current signal delay compensation apparatus according to another embodiment;
FIG. 9 is a structural block diagram of the current signal delay compensation apparatus according to still another embodiment; and
FIG. 10 is an internal structure diagram of a computer device according to an embodiment.

### DETAILED DESCRIPTION

The technical solutions in the embodiments of the present application are clearly and completely described with reference to the accompanying drawings in the embodiments of the present application, and apparently, the described embodiments are not all but only a part of the embodiments of the present application. All other embodiments obtained by a person of ordinary skill in the art based on the embodiments of the present application without creative efforts shall fall within the protection scope of the present application.

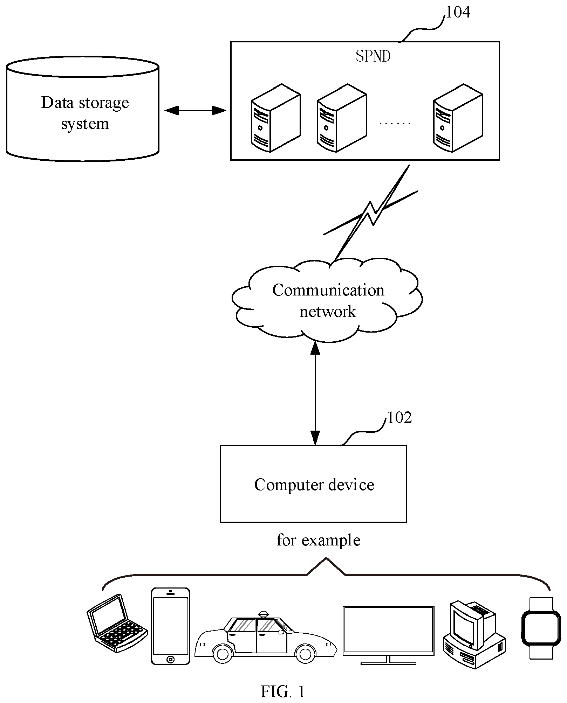

A current signal noise elimination method according to an embodiment of the present application can be applied to an application environment shown in FIG. 1. A computer device 102 is communicated with an SPND 104 via a network. A data storage system may store data required to be processed by the SPND 104. The data storage system may be integrated on the SPND 104, or may be arranged on a cloud or another network server. During the process of monitoring a current of a rhodium reactor, the SPND 104 collects a real-time current signal sampled at a present sampling moment, and transmits the real-time current signal to the computer device 102 through the communication network, and the computer device 102 may perform delay compensation on the real-time current signal on the basis of delay compensation parameters to obtain a target current signal. The computer device 102 may be, but is not limited to, various personal computers, notebook computers, smart phones, tablet computers, Internet of Things devices and portable wearable devices, and the Internet of Things devices may be smart speakers, smart televisions, smart air conditioners, smart vehicle-mounted devices, or the like. The portable wearable device can be a smart watch, a smart bracelet, a head-mounted device, or the like. The SPND 104 may be implemented by a stand-alone server or a server cluster composed of a plurality of servers.

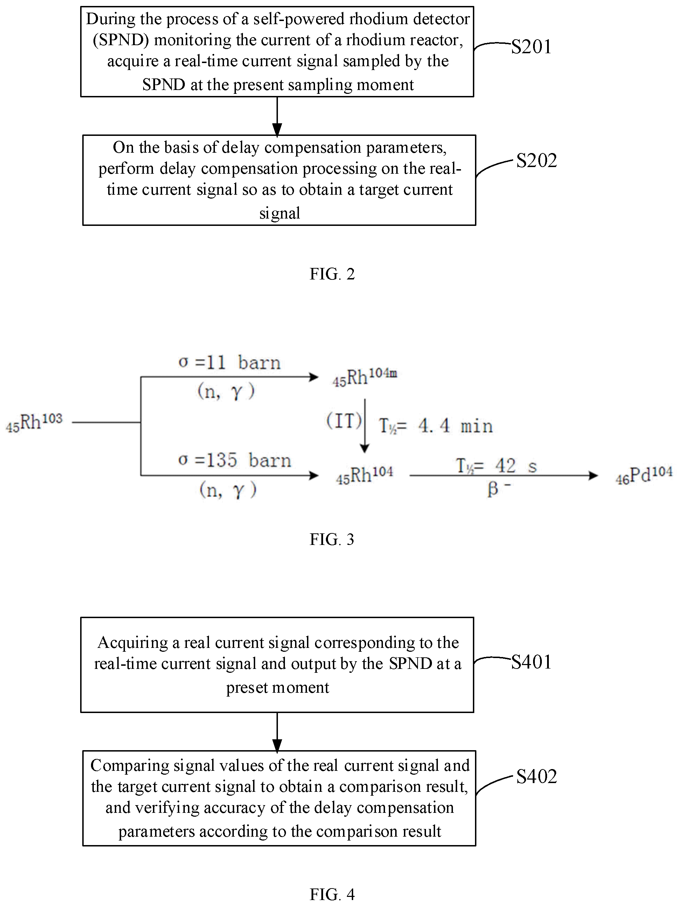

In an embodiment, as shown in FIG. 2, a current signal delay compensation method is provided, the description is given with the method applied to the computer device in FIG. 1, and the method includes the following steps:
S201: acquiring, during a process of a self-powered neutron detector (SPND) monitoring a current of a rhodium reactor, a real-time current signal sampled by the SPND at a present sampling moment.

The real-time current signal is a current signal generated during decay of a rhodium element in the rhodium reactor.

Specifically, the rhodium element generates the current signal during decay, the magnitude of the current signal is in direct proportion to a neutron flux at a position of the current signal, and the neutron flux is closely related to a power and a state of the nuclear reactor. Therefore, the SPND is usually adopted to detect the current signal at each position, so as to obtain the power and the state of the nuclear reactor according to the current signal at each position. During the detection by the SPND, the SPND may output the real-time current signal at the present sampling moment. It should be noted that the real-time current signal has a delay and cannot reflect the power and the state of the nuclear reactor at the present sampling moment.

S202: performing, on a basis of delay compensation parameters, delay compensation on the real-time current signal to obtain a target current signal.

The delay compensation parameters are related to the real-time current signal, historical current signals collected by the SPND at historical sampling moments before the present sampling moment and a sampling period, and the delay compensation parameters are used for representing the magnitude of current attenuation caused by the decay of the rhodium element in the rhodium reactor before the present sampling moment; the target current signal is a real-time circuit signal after delay compensation, and the target current signal can accurately reflect the power and the state of the nuclear reactor at the present sampling moment.

Specifically, a low-pass filter may be used to filter out high-frequency noise in the real-time current signal, and then, the delay compensation parameter and the real-time current signal are substituted into a preset compensation calculation formula (for example, formula 6 in the following embodiment) to perform a delay compensation calculation, and a calculation result is the target current signal.

Optionally, during delay compensation, whether the present sampling moment is an initial sampling moment may be determined; if the present sampling moment is the initial sampling moment, a first delay compensation parameter is acquired, and delay compensation is performed on the real-time current signal by using the first delay compensation parameter to obtain the target current signal; if the present sampling moment is not the initial sampling moment, the historical current signals collected by the SPND at the historical sampling moments and the sampling period are acquired; a second delay compensation parameter is calculated according to the real-time current signal, each historical current signal and the sampling period; and delay compensation is performed on the real-time current signal by utilizing the second delay compensation parameter to obtain the target current signal.

The first delay compensation parameter is a delay compensation parameter calculated in a historical delay compensation process, and the second delay compensation parameter is a delay compensation parameter calculated in a current delay compensation process.

Specifically, during delay compensation, since the calculation of the delay compensation parameter involves the historical current signal, and if the present sampling moment is the initial sampling moment, the historical current signal does not exist, the first delay compensation parameter calculated in the historical delay compensation process needs to be acquired from the storage system of the computer device, the first delay compensation parameter and the real-time current signal are substituted into the preset formula (for example, formula 6 in the following embodiment), and the obtained result is the target current signal. If the present sampling moment is not the initial sampling moment, the historical current signals exist, and in this case, the historical current signals and the sampling period may be acquired from the storage system of the computer device, the real-time current signal, each historical current signal and the sampling period are substituted into preset calculation formulas (for example, formulas 11 to 12 in the following embodiment), the second delay compensation parameter is calculated, and finally, the second delay compensation parameter and the real-time current signal are substituted into the preset formula (for example, formula 6 in the following embodiment), and the obtained result is the target current signal.

Optionally, the process of calculating the second delay compensation parameter may include: substituting the sampling period into preset calculation formulas (for example, formulas 9 to 12 in the following embodiment) to calculate a first compensation coefficient and a second compensation coefficient; calculating a first decay compensation parameter according to the real-time current signal, each historical current signal and the first compensation coefficient, and calculating a second decay compensation parameter according to the real-time current signal, each historical current signal and the second compensation coefficient; and summing the first decay compensation parameter and the second decay compensation parameter to obtain the second delay compensation parameter.

The first decay compensation parameter is the magnitude of current attenuation caused by decay of the rhodium element in the rhodium reactor to an activated nucleus before the present sampling moment; the second decay compensation parameter is the magnitude of current attenuation caused by decay of the rhodium element in the rhodium reactor to an isomeric state before the present sampling moment.

Exemplarily, as shown in FIG. 3 which is a schematic diagram of a nuclear reaction during decay of the rhodium element in an embodiment, after rhodium $R 45 103 h$ is subjected to neutron irradiation, 92% of the rhodium is changed into the activated nucleus $R 45 104 h$, the remaining 8% of the rhodium is changed into the isomeric state $R 45 104 m h , R 45 104 m h$ is internally converted and transitions to $R 45 104 h$ after a half-life period of 4.3 minutes, and the nuclide $R 45 104 h$ transitions to a stable element $P 46 104 d$ after β decay for 42 seconds. From analysis of physical properties of the metal rhodium, it can be found that a change of the neutron flux caused by a power change and a change of an output current of the detector satisfy a fixed value relationship, and a value study shows that the relationship between the change of the neutron flux and the current signal output by the SPND is shown in formulas (1) to (3):
$\frac{\partial {m}_{2} \left(t\right)}{\partial t} = {a}_{2} n \left(t\right) - {λ}_{2} {m}_{2} \left(t\right)$ (1)
$\frac{\partial {m}_{1} \left(t\right)}{\partial t} = {a}_{1} n \left(t\right) + {λ}_{2} {m}_{2} \left(t\right) - {λ}_{1} {m}_{1} \left(t\right)$ (2)
$I \left(t\right) = cn \left(t\right) + {λ}_{1} {m}_{1} \left(t\right)$ (3)
wherein *m*₁(*t*) and *m*₂(*t*) represent numbers of charges directly caused by ¹⁰⁴Rh and ^{104m}Rh; *n*(*t*) represents the detector current signal of the SPND; *λ*₁ and *λ*₂ represent decay constants of ¹⁰⁴Rh and ^{104m}Rh; *c* represents a transient response proportion of the detector current signal; *a*₁ and *a*₂ represent proportions of currents caused by ¹⁰⁴Rh and ^{104m}Rh; I(t) represents the current signal output by the SPND.

The above formulas (1) to (3) are subjected to Laplace transformation to obtain the following formula (4):
$\frac{I \left(s\right)}{n \left(s\right)} = \frac{{I}_{0}}{{n}_{0}} \left(c+\frac{{a}_{1} {λ}_{1}}{s + {λ}_{1}}+\frac{{a}_{2} {λ}_{1} {λ}_{2}}{{s}^{2} + \left({λ}_{1}+{λ}_{2}\right) s + {λ}_{1} {λ}_{2}}\right)$ (4)
wherein I(s) is the current signal, n(s) is the neutron flux, and $\frac{{I}_{0}}{{n}_{0}} \left(c+\frac{{a}_{1} {λ}_{1}}{s + {λ}_{1}}+\frac{{a}_{2} {λ}_{1} {λ}_{2}}{{s}^{2} + \left({λ}_{1}+{λ}_{2}\right) s + {λ}_{1} {λ}_{2}}\right)$ is a fixed parameter.

Since the fixed parameter $\frac{{I}_{0}}{{n}_{0}} \left(c+\frac{{a}_{1} {λ}_{1}}{s + {λ}_{1}}+\frac{{a}_{2} {λ}_{1} {λ}_{2}}{{s}^{2} + \left({λ}_{1}+{λ}_{2}\right) s + {λ}_{1} {λ}_{2}}\right)$ is a fixed value, that is, there is a fixed value relationship between the current signal and the neutron flux, the above formula (4) is simplified to obtain the following formula (5):
$I \left(s\right) = n \left(s\right) \frac{{I}_{0}}{{n}_{0}} \frac{1}{p} \left(1+\frac{A}{s + a}+\frac{B}{s + b}\right)$ (5)
wherein
$a = \frac{c ⋅ {λ}_{1} + {a}_{1} ⋅ {λ}_{1} + c ⋅ {λ}_{2} + \sqrt{{\left(c⋅{λ}_{1}+{a}_{1}⋅{λ}_{1}+c⋅{λ}_{2}\right)}^{2} \left.-4⋅c⋅{λ}_{1}⋅{λ}_{2}\right)}}{2 ⋅ c}$ ; $b = \frac{c ⋅ {λ}_{1} + {a}_{1} ⋅ {λ}_{1} + c ⋅ {λ}_{2} - \sqrt{{\left(c⋅{λ}_{1}+{a}_{1}⋅{λ}_{1}+c⋅{λ}_{2}\right)}^{2} \left.-4⋅c⋅{λ}_{1}⋅{λ}_{2}\right)}}{2 ⋅ c}$ ; A = (a - λ₁) · (a - λ₂)/(b - a);
B = (b - λ₁) · (b - λ₂)/(a - b);
wherein A, B, a and b are parameters, I(s) is the current signal, n(s) is the neutron flux, and P is the nuclear reactor power.

Assuming that the sampling period is T, inverse Laplace transformation is performed on the above formula (5) to obtain the following formulas (6) to (12):
${P}_{compensation} \left(k\right) = S ⋅ \left[I\left(k\right)+x1\left(k\right)+x2\left(k\right)\right]$ (6)
$x 1 \left(k\right) = M 1 ∗ I \left(k\right) + M 2 ∗ x 1 \left(k-1\right)$ (7);
$x 2 \left(k\right) = M 3 ∗ I \left(k\right) + M 4 ∗ x 2 \left(k-1\right)$ (8);
$M 1 = A ⋅ T / \left(a⋅T+1\right)$ (9);
$M 2 = 1 / \left(a⋅T+1\right)$ (10);
$M 3 = B ⋅ T / \left(b⋅T+1\right)$ (11);
$M 4 = 1 / \left(b⋅T+1\right)$ (12);
wherein I(k) is the real-time current signal at moment k, P_{compensation}(k) is the target current signal at the moment k, x1(k) is the first decay compensation parameter, x2(k) is the second decay compensation parameter, S is an adjusted parameter, M1 and M2 are the first compensation coefficients, and M3 and M4 are the second compensation coefficients; it should be noted that, when k=1, x1(k)+x2(k) is the first delay compensation parameter, and when k>1, xl(k)+x2(k) is the second delay compensation parameter, T is the sampling period, x1(k-1) and x2(k-1) are the historical current signals, and A, B, a, and b are all the parameters.

That is, when the present sampling moment is the initial sampling moment, the first delay compensation parameter x1(k)+x2(k) and the parameter S are obtained from the storage system of the computer, and the first delay compensation parameter, the parameter S and the real-time current signal I(k) are substituted into the formula (6) to calculate the target current signal.

When the present sampling moment is not the initial sampling moment, the historical current signals x1(k-1) and x2(k-1) collected by the SPND at the historical sampling moments and the sampling period T are acquired, and the sampling period T is substituted into the formulas (9) to (12) to calculate the first compensation coefficients M1 and M2 and the second compensation coefficients M3 and M4; the real-time current signal I(k), each historical current signal x1(k-1) and the first compensation coefficients M1 and M2 are substituted into the formula (7) to calculate the first decay compensation parameter x1(k); the real-time current signal I(k), each historical current signal x1(k-2) and the second compensation coefficients M3 and M4 are substituted into the formula (8) to calculate the second decay compensation parameter x2(k); the sum x1(k)+x2(k) of the first decay compensation parameter x1(k) and the second decay compensation parameter x2(k) is taken as the second delay compensation parameter; the second delay compensation parameter x1(k)+x2(k), the parameter S and the real-time current signal I(k) are substituted into the above formula (6) to calculate the target current signal.

In the above embodiment, during the process of the SPND monitoring the current of the rhodium reactor, the real-time current signal sampled by the SPND at the present sampling moment is acquired, and then, on the basis of the delay compensation parameters, the delay compensation is performed on the real-time current signal generated during the decay of the rhodium element in the rhodium reactor, so as to obtain the target current signal. Since delay compensation is a software method, compared with a traditional technology in which hardware is used for delay compensation, a cost is reduced, and delay compensation can be performed on the current signal at any time, thus significantly improving flexibility of delay compensation.

In the current signal delay compensation method according to the above embodiment, the delay compensation parameter is artificially set, the delay compensation parameter is a key factor for determining whether the target current signal is accurate, and therefore, in this embodiment, as shown in FIG. 4, a process of verifying accuracy of the delay compensation parameter is described, and the specific method includes:
S401: acquiring a real current signal corresponding to the real-time current signal and output by the SPND at a preset moment.

The preset moment is chronologically after the present sampling moment, and the real current signal is a current signal capable of accurately reflecting the state and the power of the nuclear reactor.

Specifically, since the current signal output by the SPND has a delay, after the preset moment, the SPND outputs the real current signal corresponding to the real-time current signal, that is, after the preset moment, the real current signal corresponding to the real-time current signal and output by the SPND is acquired.

S402: comparing signal values of the real current signal and the target current signal to obtain a comparison result, and verifying accuracy of the delay compensation parameters according to the comparison result.

Specifically, a loss rate between the real current signal and the target current signal can be calculated according to the signal values of the real current signal and the target current signal, and if the loss rate is less than or equal to a loss rate threshold, the accuracy of the delay compensation parameter is proved to be higher, and adjustment is not needed; if the loss rate is greater than the loss rate threshold, the accuracy of the delay compensation parameter is proved to be lower, adjustment is needed, and after the delay compensation parameter is adjusted, the operation of calculating a loss value is executed again until the loss value is less than or equal to the loss rate threshold.

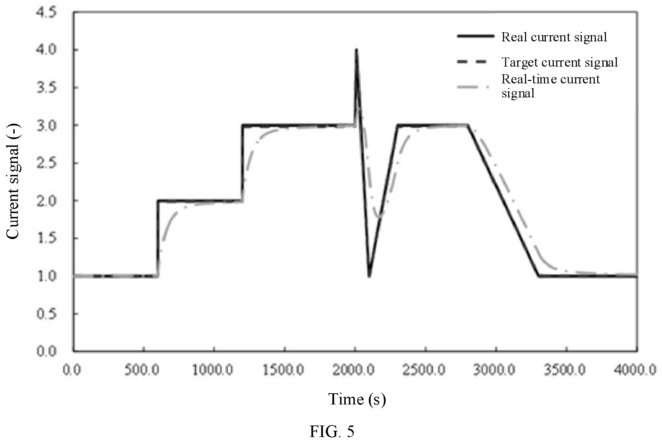

Exemplarily, as shown in FIG. 5 which shows a signal value relationship among the real-time current signal, the target current signal and the real current signal, it can be known that waveforms of the target current signal and the real current signal are almost coincident, that is, the target current signal in the present application can accurately reflect the power and the state of the nuclear reactor.

In the above embodiment, the real current signal corresponding to the real-time current signal and output by the SPND is compared with the target current signal obtained after delay compensation, so as to verify the accuracy of the delay compensation parameter, thereby ensuring the accuracy of the delay compensation parameter to a great extent and then ensuring accuracy of the target current signal.

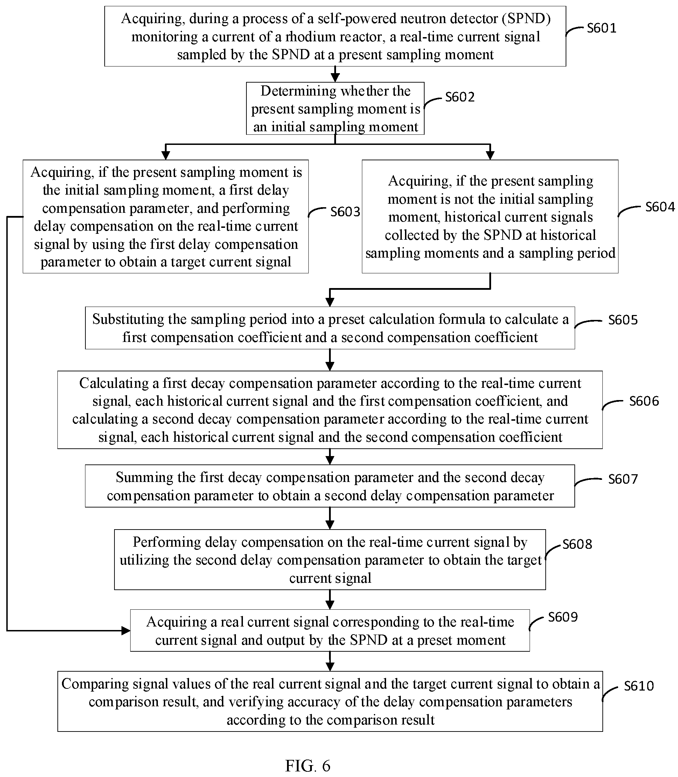

For more fully demonstrating the present solution, as shown in FIG. 6, this embodiment provides an optional manner of a current signal delay compensation method, including the following steps.

S601: acquiring, during the process of a self-powered neutron detector (SPND) monitoring a current of a rhodium reactor, a real-time current signal sampled by the SPND at a present sampling moment.

S602: determining whether the present sampling moment is an initial sampling moment.

S603: acquiring, if the present sampling moment is the initial sampling moment, a first delay compensation parameter, and performing delay compensation on the real-time current signal by using the first delay compensation parameter to obtain a target current signal.

The first delay compensation parameter is a delay compensation parameter calculated in a historical delay compensation process.

S604: acquiring, if the present sampling moment is not the initial sampling moment, historical current signals collected by the SPND at historical sampling moments and a sampling period.

S605: substituting the sampling period into a preset calculation formula to calculate a first compensation coefficient and a second compensation coefficient.

S606: calculating a first decay compensation parameter according to the real-time current signal, each historical current signal and the first compensation coefficient, and calculating a second decay compensation parameter according to the real-time current signal, each historical current signal and the second compensation coefficient.

S607: summing the first decay compensation parameter and the second decay compensation parameter to obtain a second delay compensation parameter.

S608: performing delay compensation on the real-time current signal by utilizing the second delay compensation parameter to obtain the target current signal.

The first decay compensation parameter is the magnitude of current attenuation caused by decay of a rhodium element in the rhodium reactor to an activated nucleus before the present sampling moment; the second decay compensation parameter is the magnitude of current attenuation caused by decay of the rhodium element in the rhodium reactor to an isomeric state before the present sampling moment.

S609: acquiring a real current signal corresponding to the real-time current signal and output by the SPND at a preset moment.

The preset moment is chronologically after the present sampling moment.

S610: comparing signal values of the real current signal and the target current signal to obtain a comparison result, and verifying accuracy of the delay compensation parameters according to the comparison result.

For specific processes of S601 to S610 described above, reference may be made to the description of the above method embodiments, the implementation principle and technical effects are similar, and details are not repeated herein.

It should be understood that, although the steps in the flow charts involved in the above embodiments are shown in sequence as indicated by the arrows, the steps are not necessarily performed in sequence as indicated by the arrows. Unless explicitly stated herein, the steps are not limited to being performed in the exact order and may be performed in other orders. At least part of the steps in the flow charts involved in the above embodiments may include multiple steps or multiple stages, which are not necessarily performed at the same moment, but may be performed at different moments, and the steps or the stages are not necessarily performed in sequence, but may be performed alternately with other steps or at least part of the steps or the stages in other steps.

Based on the same inventive concept, an embodiment of the present application further provides a current signal delay compensation apparatus for implementing the above current signal delay compensation method. The implementation solution for solving problems provided by the apparatus is similar to the implementation solution described in the above method, and therefore, for the specific definitions in one or more embodiments of the current signal delay compensation apparatus provided below, reference can be made to the definitions of the current signal delay compensation method in the above description, and the definitions are not repeated herein.

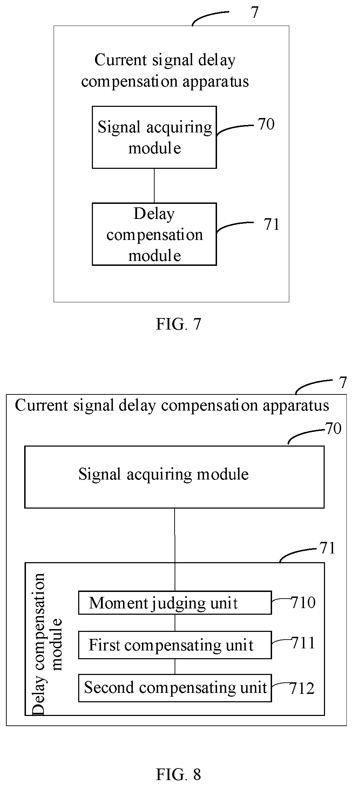

In an embodiment, as shown in FIG. 7, there is provided a current signal delay compensation apparatus 7, including:
a signal acquiring module 70 configured to, acquire, during a process of a self-powered neutron detector (SPND) monitoring a current of a rhodium reactor, a real-time current signal sampled by the SPND at a present sampling moment; and
a delay compensation module 71 configured to, perform, on a basis of delay compensation parameters, delay compensation on the real-time current signal to obtain a target current signal, wherein the real-time current signal is a current signal generated during decay of a rhodium element in the rhodium reactor, the delay compensation parameters are related to the real-time current signal, historical current signals collected by the SPND at historical sampling moments before the present sampling moment and a sampling period, and the delay compensation parameters are used for representing the magnitude of current attenuation caused by the decay of the rhodium element in the rhodium reactor before the present sampling moment.

In another embodiment, as shown in FIG. 8, the delay compensation module 71 in FIG. 7 includes:
a moment judging unit 710 configured to determine whether the present sampling moment is an initial sampling moment;
a first compensating unit 711 configured to, acquire, if the present sampling moment is the initial sampling moment, a first delay compensation parameter, and perform delay compensation on the real-time current signal by using the first delay compensation parameter to obtain the target current signal, the first delay compensation parameter being a delay compensation parameter calculated in a historical delay compensation process; and
a second compensating unit 712 configured to, acquire, if the present sampling moment is not the initial sampling moment, the historical current signals collected by the SPND at the historical sampling moments and the sampling period; calculate a second delay compensation parameter according to the real-time current signal, each historical current signal and the sampling period; and perform delay compensation on the real-time current signal by utilizing the second delay compensation parameter to obtain the target current signal.

In another embodiment, the second compensating unit 712 in FIG. 8 is specifically configured to:
substitute the sampling period into a preset calculation formula to calculate a first compensation coefficient and a second compensation coefficient; calculate a first decay compensation parameter according to the real-time current signal, each historical current signal and the first compensation coefficient, and calculate a second decay compensation parameter according to the real-time current signal, each historical current signal and the second compensation coefficient; and sum the first decay compensation parameter and the second decay compensation parameter to obtain the second delay compensation parameter.

In another embodiment, the first decay compensation parameter is the magnitude of current attenuation caused by decay of the rhodium element in the rhodium reactor to an activated nucleus before the present sampling moment; the second decay compensation parameter is the magnitude of current attenuation caused by decay of the rhodium element in the rhodium reactor to an isomeric state before the present sampling moment.

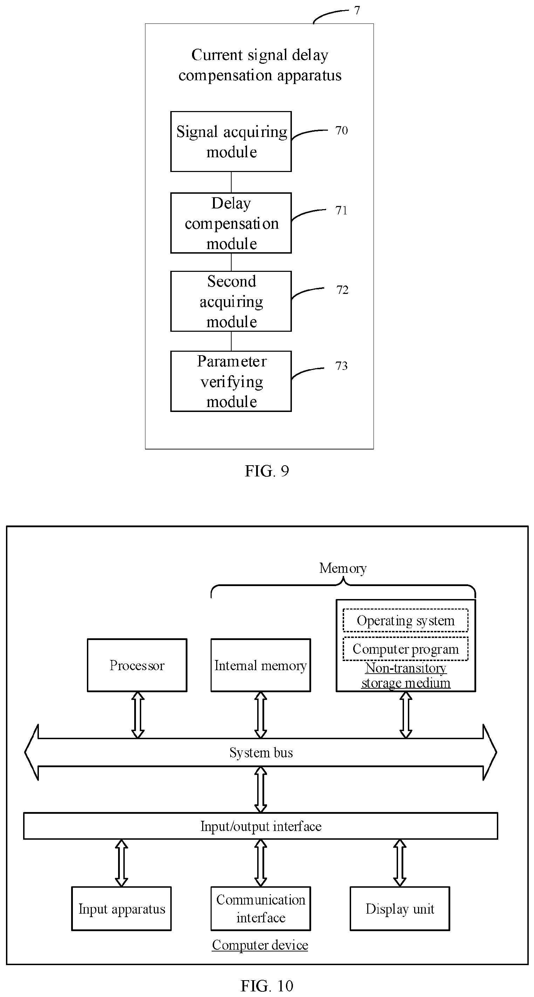

In another embodiment, as shown in FIG. 9, the current signal delay compensation apparatus 71 in FIG. 7 further includes:
a second acquiring module 72 configured to acquire a real current signal corresponding to the real-time current signal and output by the SPND at a preset moment, the preset moment being chronologically after the present sampling moment; and
a parameter verifying module 73 configured to compare signal values of the real current signal and the target current signal to obtain a comparison result, and verify accuracy of the delay compensation parameters according to the comparison result.

The modules in the current signal delay compensation apparatus may be wholly or partially implemented by software, hardware and a combination thereof. The modules may be embedded in or independent of a processor in a computer device in hardware, or may be stored in a memory in the computer device in software, such that the processor can conveniently call the modules to execute the operations corresponding to the modules.

In an exemplary embodiment, there is provided a computer device, which may be a server, an internal structure diagram of which may be shown in FIG. 10. The computer device includes a processor, a memory, an input/output (I/O) interface, and a communication interface. The processor, the memory, and the input/output interface are connected through a system bus, and the communication interface is connected to the system bus through the input/output interface. The processor of the computer device is configured to provide computing and control capabilities. The memory of the computer device includes a non-transitory storage medium and an internal memory. The non-transitory storage medium stores an operating system, a computer program, and a database. The internal memory provides an environment for running of the operating system and the computer program in the non-transitory storage medium. The database of the computer device is configured to store current signal and delay compensation parameter data. The input/output interface of the computer device is configured to exchange information between the processor and an external device. The communication interface of the computer device is configured to be communicated with an external terminal through a network connection. The computer program is executed by the processor to implement a current signal delay compensation method.

In an embodiment, there is provided a computer device, which may be a terminal, an internal structure diagram of which may be shown in FIG. 10. The computer device includes a processor, a memory, an input/output interface, a communication interface, a display unit, and an input apparatus. The processor, the memory, and the input/output interface are connected through a system bus, and the communication interface, the display unit, and the input apparatus are connected to the system bus through the input/output interface. The processor of the computer device is configured to provide computing and control capabilities. The memory of the computer device includes a non-transitory storage medium and an internal memory. The non-transitory storage medium stores an operating system and a computer program. The internal memory provides an environment for running of the operating system and the computer program in the non-transitory storage medium. The input/output interface of the computer device is configured to exchange information between the processor and an external device. The communication interface of the computer device is configured to be communicated with an external terminal in a wired or wireless mode, and the wireless mode can be implemented through WIFI, a mobile cellular network, NFC (near field communication), or other technologies. The computer program is executed by the processor to implement a current signal delay compensation method. The display unit of the computer device is configured to form a visually visible picture and can be a display screen, a projection apparatus, or a virtual reality imaging apparatus. The display screen may be a liquid crystal display screen or an electronic ink display screen, and the input apparatus of the computer device may be a touch layer covering the display screen, or may be a key, a trackball or a touch pad arranged on a casing of the computer device, or may be an external keyboard, touch pad, mouse, or the like.

Those skilled in the art will appreciate that the structure shown in FIG. 10 is only a block diagram of a part of the structure associated with the application solution and does not constitute a limitation on the computer device to which the application solution is applied, and a particular computer device may include more or fewer components than shown components, or combine certain components, or have a different arrangement of components.

In an embodiment, there is provided a computer device, including a memory and a processor, the memory storing a computer program, and the processor implementing the following steps when executing the computer program:
acquiring, during a process of a self-powered neutron detector (SPND) monitoring a current of a rhodium reactor, a real-time current signal sampled by the SPND at a present sampling moment; and
performing, on the basis of delay compensation parameters, delay compensation on the real-time current signal to obtain a target current signal,
wherein the real-time current signal is a current signal generated during decay of a rhodium element in the rhodium reactor, the delay compensation parameters are related to the real-time current signal, historical current signals collected by the SPND at historical sampling moments before the present sampling moment and a sampling period, and the delay compensation parameters are used for representing the magnitude of current attenuation caused by the decay of the rhodium element in the rhodium reactor before the present sampling moment.

In an embodiment, the processor also implements the following steps when executing the computer program:
determining whether the present sampling moment is an initial sampling moment; and acquiring, if the present sampling moment is the initial sampling moment, a first delay compensation parameter, and performing delay compensation on the real-time current signal by using the first delay compensation parameter to obtain the target current signal, the first delay compensation parameter being a delay compensation parameter calculated in a historical delay compensation process.

In an embodiment, the processor also implements the following steps when executing the computer program:
acquiring, if the present sampling moment is not the initial sampling moment, the historical current signals collected by the SPND at the historical sampling moments and the sampling period; calculating a second delay compensation parameter according to the real-time current signal, each historical current signal and the sampling period; and performing delay compensation on the real-time current signal by utilizing the second delay compensation parameter to obtain the target current signal.

In an embodiment, the processor also implements the following steps when executing the computer program:
substituting the sampling period into a preset calculation formula to calculate a first compensation coefficient and a second compensation coefficient; calculating a first decay compensation parameter according to the real-time current signal, each historical current signal and the first compensation coefficient, and calculating a second decay compensation parameter according to the real-time current signal, each historical current signal and the second compensation coefficient; and summing the first decay compensation parameter and the second decay compensation parameter to obtain the second delay compensation parameter.

In an embodiment, the first decay compensation parameter is the magnitude of current attenuation caused by decay of the rhodium element in the rhodium reactor to an activated nucleus before the present sampling moment; the second decay compensation parameter is the magnitude of current attenuation caused by decay of the rhodium element in the rhodium reactor to an isomeric state before the present sampling moment.

In an embodiment, the processor also implements the following steps when executing the computer program:
acquiring a real current signal corresponding to the real-time current signal and output by the SPND at a preset moment, the preset moment being chronologically after the present sampling moment; and
comparing signal values of the real current signal and the target current signal to obtain a comparison result, and verifying accuracy of the delay compensation parameters according to the comparison result.

In an embodiment, there is provided a computer-readable storage medium having a computer program stored thereon, the computer program, when executed by a processor, implementing the following steps:
acquiring, during the process of a self-powered neutron detector (SPND) monitoring a current of a rhodium reactor, a real-time current signal sampled by the SPND at a present sampling moment; and
performing, on the basis of delay compensation parameters, delay compensation on the real-time current signal to obtain a target current signal,
wherein the real-time current signal is a current signal generated during decay of a rhodium element in the rhodium reactor, the delay compensation parameters are related to the real-time current signal, historical current signals collected by the SPND at historical sampling moments before the present sampling moment and a sampling period, and the delay compensation parameters are used for representing the magnitude of current attenuation caused by the decay of the rhodium element in the rhodium reactor before the present sampling moment.

In an embodiment, the computer program, when executed by the processor, also implements the following steps:
determining whether the present sampling moment is an initial sampling moment; and acquiring, if the present sampling moment is the initial sampling moment, a first delay compensation parameter, and performing delay compensation on the real-time current signal by using the first delay compensation parameter to obtain the target current signal, the first delay compensation parameter being a delay compensation parameter calculated in a historical delay compensation process.

In an embodiment, the computer program, when executed by the processor, also implements the following steps:
acquiring, if the present sampling moment is not the initial sampling moment, the historical current signals collected by the SPND at the historical sampling moments and the sampling period; calculating a second delay compensation parameter according to the real-time current signal, each historical current signal and the sampling period; and performing delay compensation on the real-time current signal by utilizing the second delay compensation parameter to obtain the target current signal.

In an embodiment, the computer program, when executed by the processor, also implements the following steps:
substituting the sampling period into a preset calculation formula to calculate a first compensation coefficient and a second compensation coefficient; calculating a first decay compensation parameter according to the real-time current signal, each historical current signal and the first compensation coefficient, and calculating a second decay compensation parameter according to the real-time current signal, each historical current signal and the second compensation coefficient; and summing the first decay compensation parameter and the second decay compensation parameter to obtain the second delay compensation parameter.

In an embodiment, the first decay compensation parameter is the magnitude of current attenuation caused by decay of the rhodium element in the rhodium reactor to an activated nucleus before the present sampling moment; the second decay compensation parameter is the magnitude of current attenuation caused by decay of the rhodium element in the rhodium reactor to an isomeric state before the present sampling moment.

In an embodiment, the computer program, when executed by the processor, also implements the following steps:
acquiring a real current signal corresponding to the real-time current signal and output by the SPND at a preset moment, the preset moment being chronologically after the present sampling moment; and
comparing signal values of the real current signal and the target current signal to obtain a comparison result, and verifying accuracy of the delay compensation parameters according to the comparison result.

In an embodiment, there is provided a computer program product including a computer program which, when executed by a processor, implements the following steps:
acquiring, during a process of a self-powered neutron detector (SPND) monitoring a current of a rhodium reactor, a real-time current signal sampled by the SPND at a present sampling moment; and
performing, on the basis of delay compensation parameters, delay compensation on the real-time current signal to obtain a target current signal,
wherein the real-time current signal is a current signal generated during decay of a rhodium element in the rhodium reactor, the delay compensation parameters are related to the real-time current signal, historical current signals collected by the SPND at historical sampling moments before the present sampling moment and a sampling period, and the delay compensation parameters are used for representing the magnitude of current attenuation caused by the decay of the rhodium element in the rhodium reactor before the present sampling moment.

In an embodiment, the computer program, when executed by the processor, also implements the following steps:
determining whether the present sampling moment is an initial sampling moment; and acquiring, if the present sampling moment is the initial sampling moment, a first delay compensation parameter, and performing delay compensation on the real-time current signal by using the first delay compensation parameter to obtain the target current signal, the first delay compensation parameter being a delay compensation parameter calculated in a historical delay compensation process.

In an embodiment, the computer program, when executed by the processor, also implements the following steps:
acquiring, if the present sampling moment is not the initial sampling moment, the historical current signals collected by the SPND at the historical sampling moments and the sampling period; calculating a second delay compensation parameter according to the real-time current signal, each historical current signal and the sampling period; and performing delay compensation on the real-time current signal by utilizing the second delay compensation parameter to obtain the target current signal.

In an embodiment, the computer program, when executed by the processor, also implements the following steps:
substituting the sampling period into a preset calculation formula to calculate a first compensation coefficient and a second compensation coefficient; calculating a first decay compensation parameter according to the real-time current signal, each historical current signal and the first compensation coefficient, and calculating a second decay compensation parameter according to the real-time current signal, each historical current signal and the second compensation coefficient; and summing the first decay compensation parameter and the second decay compensation parameter to obtain the second delay compensation parameter.

In an embodiment, the first decay compensation parameter is the magnitude of current attenuation caused by decay of the rhodium element in the rhodium reactor to an activated nucleus before the present sampling moment; the second decay compensation parameter is the magnitude of current attenuation caused by decay of the rhodium element in the rhodium reactor to an isomeric state before the present sampling moment.

In an embodiment, the computer program, when executed by the processor, also implements the following steps:
acquiring a real current signal corresponding to the real-time current signal and output by the SPND at a preset moment, the preset moment being chronologically after the present sampling moment; and
comparing signal values of the real current signal and the target current signal to obtain a comparison result, and verifying accuracy of the delay compensation parameters according to the comparison result.

It will be understood by those skilled in the art that all or part of the processes of the methods according to the embodiments described above may be implemented by a computer program instructing related hardware, and the computer program may be stored in a non-transitory computer-readable storage medium, and when executed, may include the processes of the embodiments of the methods described above. Any reference to memories, databases or other media used in the embodiments of the present application can include at least one of a non-transitory memory and a transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, or the like. The transitory memory can include a random access memory (RAM), an external cache memory, or the like. By way of illustration and not limitation, the RAM can take many forms such as a static random access memory (SRAM) and a dynamic random access memory (DRAM). The databases involved in the embodiments of the present application may include at least one of relational and non-relational databases. The non-relational database may include, but is not limited to, a block chain-based distributed database, or the like. The processors referred to in the embodiments of the present application may include, but are not limited to, general processors, central processors, graphics processors, digital signal processors, programmable logic units, data processing logic units based on quantum calculations, or the like.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the protection scope of the present application should be subject to the appended claims.

## Claims

1. A current signal delay compensation method for measuring a core signal of a nuclear reactor, **characterized by** comprising:
acquiring, during a process of a self-powered neutron detector (SPND) monitoring a current of a rhodium reactor, a real-time current signal sampled by the SPND at a present sampling moment; and
performing, on a basis of delay compensation parameters, delay compensation on the real-time current signal to obtain a target current signal,
wherein the real-time current signal is a current signal generated during decay of a rhodium element in the rhodium reactor, the delay compensation parameters are related to the real-time current signal, historical current signals collected by the SPND at historical sampling moments before the present sampling moment and a sampling period, and the delay compensation parameters are used for representing magnitude of current attenuation caused by the decay of the rhodium element in the rhodium reactor before the present sampling moment.

2. The method according to claim 1, **characterized in that**, performing, on the basis of the delay compensation parameters, the delay compensation on the real-time current signal to obtain the target current signal comprises:
determining whether the present sampling moment is an initial sampling moment; and
acquiring, under the condition that the present sampling moment is the initial sampling moment, a first delay compensation parameter, and performing delay compensation on the real-time current signal by using the first delay compensation parameter to obtain the target current signal, the first delay compensation parameter being a delay compensation parameter calculated in a historical delay compensation process.

3. The method according to claim 1, **characterized in that**, performing, on the basis of the delay compensation parameters, the delay compensation on the real-time current signal to obtain the target current signal further comprises:
acquiring, under a condition that the present sampling moment is not the initial sampling moment, the historical current signals collected by the SPND at the historical sampling moments and the sampling period;
calculating a second delay compensation parameter according to the real-time current signal, each historical current signal and the sampling period; and
performing delay compensation on the real-time current signal by utilizing the second delay compensation parameter to obtain the target current signal.

4. The method according to claim 3, **characterized in that** calculating the second delay compensation parameter according to the real-time current signal, each historical current signal and the sampling period comprises:
substituting the sampling period into a preset calculation formula to calculate a first compensation coefficient and a second compensation coefficient;
calculating a first decay compensation parameter according to the real-time current signal, each historical current signal and the first compensation coefficient, and calculating a second decay compensation parameter according to the real-time current signal, each historical current signal and the second compensation coefficient; and
summing the first decay compensation parameter and the second decay compensation parameter to obtain the second delay compensation parameter.

5. The method according to claim 4, **characterized in that** the first decay compensation parameter is magnitude of current attenuation caused by decay of the rhodium element in the rhodium reactor to an activated nucleus before the present sampling moment; the second decay compensation parameter is magnitude of current attenuation caused by decay of the rhodium element in the rhodium reactor to an isomeric state before the present sampling moment.

6. The method according to any one of claims 1 to 5, **characterized by** further comprising:
acquiring a real current signal corresponding to the real-time current signal and output by the SPND at a preset moment, the preset moment being chronologically after the present sampling moment; and
comparing signal values of the real current signal and the target current signal to obtain a comparison result, and verifying accuracy of the delay compensation parameters according to the comparison result.

7. A current signal delay compensation apparatus, **characterized by** comprising:
a signal acquiring module configured to, acquire, during a process of a self-powered neutron detector (SPND) monitoring a current of a rhodium reactor, a real-time current signal sampled by the SPND at a present sampling moment; and
a delay compensation module configured to, perform, on a basis of delay compensation parameters, delay compensation on the real-time current signal to obtain a target current signal, wherein the real-time current signal is a current signal generated during decay of a rhodium element in the rhodium reactor, the delay compensation parameters are related to the real-time current signal, historical current signals collected by the SPND at historical sampling moments before the present sampling moment and a sampling period, and the delay compensation parameters are used for representing magnitude of current attenuation caused by the decay of the rhodium element in the rhodium reactor before the present sampling moment.

8. The apparatus according to claim 7, **characterized in that** the delay compensation module is configured to determine whether the present sampling moment is an initial sampling moment, and acquire, under a condition that the present sampling moment is the initial sampling moment, a first delay compensation parameter, and perform delay compensation on the real-time current signal by using the first delay compensation parameter to obtain the target current signal, the first delay compensation parameter being a delay compensation parameter calculated in a historical delay compensation process.

9. The apparatus according to claim 7, **characterized in that** the delay compensation module is further configured to, acquire, under a condition that the present sampling moment is not the initial sampling moment, the historical current signals collected by the SPND at the historical sampling moments and the sampling period, calculate a second delay compensation parameter according to the real-time current signal, each historical current signal and the sampling period, and perform delay compensation on the real-time current signal by utilizing the second delay compensation parameter to obtain the target current signal.

10. The apparatus according to claim 9, **characterized in that** the delay compensation module is further configured to substitute the sampling period into a preset calculation formula to calculate a first compensation coefficient and a second compensation coefficient, calculate a first decay compensation parameter according to the real-time current signal, each historical current signal and the first compensation coefficient, calculate a second decay compensation parameter according to the real-time current signal, each historical current signal and the second compensation coefficient, and sum the first decay compensation parameter and the second decay compensation parameter to obtain the second delay compensation parameter.

11. The apparatus according to claim 10, **characterized in that** the first decay compensation parameter is magnitude of current attenuation caused by decay of the rhodium element in the rhodium reactor to an activated nucleus before the present sampling moment; the second decay compensation parameter is magnitude of current attenuation caused by decay of the rhodium element in the rhodium reactor to an isomeric state before the present sampling moment.

12. The apparatus according to any one of claims 7 to 11, **characterized in that** the apparatus is further configured to acquire a real current signal corresponding to the real-time current signal and output by the SPND at a preset moment, the preset moment being chronologically after the present sampling moment, compare signal values of the real current signal and the target current signal to obtain a comparison result, and verify accuracy of the delay compensation parameters according to the comparison result.

13. A computer device, comprising a memory and a processor, the memory storing a computer program, and **characterized in that** the processor implementing the steps of the method according to any one of claims 1 to 6 when executing the computer program.

14. A computer-readable storage medium having a computer program stored thereon, **characterized in that** the computer program, when executed by a processor, implementing the steps of the method according to any one of claims 1 to 6.

15. A computer program product comprising a computer program, **characterized in that** the computer program, when executed by a processor, implementing the steps of the method according to any one of claims 1 to 6.
